(19) **Europäisches Patentamt**

**European Patent Office**

**Office européen des brevets**

(11) **EP 1 568 574 A1**

(12) **EUROPÄISCHE PATENTANMELDUNG**

(43) Veröffentlichungstag:
31.08.2005 Patentblatt 2005/35

(51) Int Cl.$^7$: **B62D 5/04**

(21) Anmeldenummer: 05001515.5

(22) Anmeldetag: 26.01.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **28.02.2004 DE 102004009819**

(71) Anmelder: **ZF Lenksysteme GmbH**
**73527 Schwäbisch Gmünd (DE)**

(72) Erfinder:
• **Gerd, Reimann**
**74232 Abstatt (DE)**
• **Reinelt, Wolfgang**
**70374 Stuttgart (DE)**
• **Klier, Willy**
**73527 Schwäbisch Gmünd (DE)**

(54) **Verfahren zum Betrieb eines Lenksystems mit einer minimalen Schnittstelle**

(57) Die Erfindung betrifft ein Verfahren zum Betrieb eines Lenksystems für ein Kraftfahrzeug mit wenigstens einem lenkbaren Rad, wobei eine durch den Fahrer des Kraftfahrzeugs initiierte Lenkbewegung und/oder weitere fahrzeugspezifische Zustände, insbesondere die Fahrzeuggeschwindigkeit, als Eingangssignale von einem Steuergerät empfangen werden und daraus als Ausgangssignal ein Steuersignal zur Erzeugung der Lenkbewegung des lenkbaren Rades insbesondere über eine Aktuatorik des Lenksystems, vorzugsweise zur Realisierung von Nutzanwendungen, ermittelt wird. Vorgesehen ist die Verwendung einer minimalen Systemschnittstelle mit den notwendigen Eingangssignalen und Ausgangssignalen für die Anbindung an weitere Fahrzeugsysteme, unter anderem elektronisches Stabilitätsprogramm (ESP) und Antiblockiersystem (ABS).

Fig. 3

**Beschreibung**

Die Erfindung betrifft ein Verfahren zum Betrieb eines Lenksystems gemäß dem Oberbegriff von Anspruch 1.

Ein gattungsgemäßes Verfahren ist aus der DE 197 51 125 A1 bekannt. Dabei werden die vom Fahrer durch ein Lenkrad aufgebrachten Lenkbewegungen mittels eines Überlagerungsgetriebes mit den Bewegungen des Stellantriebes überlagert. Die so entstandene überlagerte Bewegung wird über das Lenkgetriebe bzw. das Lenkgestänge an die lenkbar ausgelegten Räder zur Einstellung des Lenkwinkels weitergeleitet. Hierbei ist der Stellantrieb als Elektromotor ausgelegt. Der zur Lenkunterstützung erforderliche Motorwinkel bzw. sein Sollwert wird u. a. aus dem Lenkradwinkel bestimmt. Darüber hinaus kann der Motorwinkel auch abhängig sein von Signalen, welche die durch Sensoren und/oder andere Fahrzeugsysteme, wie z.B. ein elektronisches Stabilitätsprogramm (ESP), erfassten Fahrzeugbewegungen repräsentieren. Dies erfolgt durch ein Steuergerät, auf welchem die für die Bestimmung der erforderlichen Motorwinkel bzw. die für die Steuerung der Nutzanwendungen erforderlichen Programme ausgeführt werden. Als Nutzeingangssignale werden z.B. Fahrzeuggeschwindigkeit, Ritzelwinkel, der Motorwinkel selbst und der Lenkradwinkel vom Steuergerät benötigt.

Durch die notwendige Kommunikation mit den weiteren Fahrzeugsystemen (ESP, ABS, etc.) ist eine modulare Systemvernetzung nahezu unumgänglich. Um diese zu schaffen ist zusätzlich eine vom Kraftfahrzeug selbst bzw. von dessen anderen Fahrzeugsystemen möglichst unabhängige Schnittstelle erforderlich. Diese Schnittstelle sollte sowohl physikalische Signale als auch Statussignale oder dergleichen aufweisen.

Des weiteren sollte eine derartige Schnittstelle möglichst nicht komplex sein, da sonst eine hohe Abhängigkeit der Fahrwerksysteme vorhanden wäre und ein hoher Aufwand hinsichtlich zusätzlicher Signalüberwachung notwendig wäre.

Der vorliegenden Erfindung liegt daher die Aufgabe zugrunde, ein Verfahren zum Betrieb eines Lenksystems, der eingangs erwähnten Art zu schaffen, welches die Nachteile des Standes der Technik vermeidet, insbesondere eine Schnittstelle zu verschiedenen anderen Fahrzeugsystemen implementiert, welche eine geringe Komplexität aufweist.

Erfindungsgemäß wird diese Aufgabe durch den kennzeichnenden Teil von Anspruch 1 gelöst.

Durch diese Maßnahmen wird das erfindungsgemäße Verfahren zum Betrieb eines Lenksystems in vorteilhafter Weise um eine minimale Schnittstelle zu anderen Fahrzeugsystemen wie z.B. ESP oder ABS erweitert. Durch die minimale Ausbildung der Schnittstelle wird gewährleistet, dass nur die für die beteiligten Systeme unbedingt notwendigen Ein- und Ausgangssignale enthalten sind und überprüft bzw. plausibilisiert werden müssen.

Von Vorteil ist es, wenn als Ausgangssignale

- ein Vorderradwinkel;
- ein Soll-Überlagerungswinkel;
- ein Ist-Überlagerungswinkel;
- ein Fahrerwunschwinkel;
- eine Dynamikreserve;
- ein Systemstatus des Lenksystems;
- ein Status von Sicherheitsfunktionen; und
- ein Ritzelwinkelsensorsignal

verwendet werden.

Von Vorteil ist es, wenn als Eingangssignale

- ein Soll-Überlagerungswinkel zur fahrzeugdynamischen Stabilisierung;
- ein Flag zur Ausführung eines fahrdynamischen Stabilisierungseingriffs;
- ein Flag zur Umschaltung zwischen Kennfeldern für eine variable Lenkübersetzung;
- ein Flag zur Umschaltung zwischen Kennfeldern für eine Servotronic- und ECO-Ansteuerung;
- Raddrehzahlen mit Vorzeichen;
- ein Status von Raddrehzahlsensoren;
- der Lenkradwinkel;
- Flags für ESP- und ABS-Eingriff für jedes Rad des Kraftfahrzeugs; und
- eine Drehzahl eines Verbrennungsmotors des Kraftfahrzeugs;

verwendet werden.

In einer verfahrensmäßigen Ausgestaltung der Erfindung kann vorgesehen sein, dass als Eingangssignal insbesondere dann ein aktuell eingelegter Gang verwendet wird, wenn das Vorzeichen der Raddrehzahlen nicht vorliegt.

Die Information über den eingelegten Gang wird nur dann benötigt, wenn die Raddrehzahlen kein Vorzeichen besitzen.

Erfindungsgemäß kann ferner vorgesehen sein, dass als Eingangs- und/oder Ausgangssignale, insbesondere bei der Übermittlung sicherheitsrelevanter Signale, zusätzliche Überwachungssignale, vorzugsweise Prüfsummen oder Zähler verwendet werden.

Durch diese Maßnahme können die sicherheitsrelevanten Signale bei der CAN-Kommunikation wirksam überwacht bzw. auf Plausibilität überprüft werden.

Nachfolgend ist anhand der Zeichnung ein Ausführungsbeispiel prinzipmäßig dargestellt.

Es zeigen:

Fig. 1 und 2    ein Schema des Lenksystems nach dem Stand der Technik, von dem die Erfindung im Ausführungsbeispiel ausgeht; und

Fig. 3 ein Schema einer minimalen Schnittstelle im Rahmen eines erfindungsgemäßen Verfahrens.

Im folgenden soll die Erfindung anhand eines Ausführungsbeispiels dargestellt werden. Dabei wird beispielhaft von einer eingangs erwähnten Überlagerungslenkung ausgegangen. Die Erfindung ist selbstverständlich auch bei anderen Lenksystemen, wie z.B. Steer by Wire, etc., nach einer Erweiterung einsetzbar.

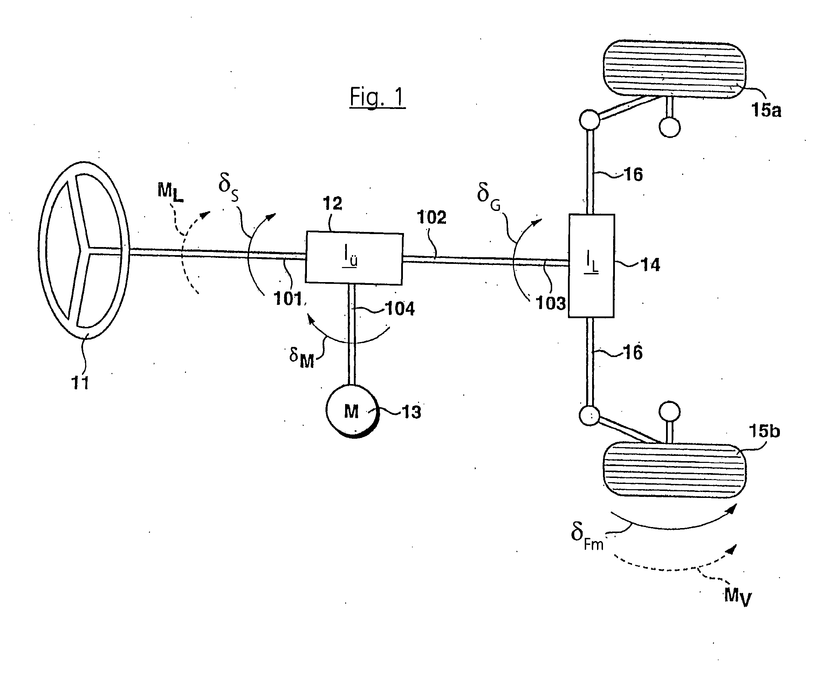

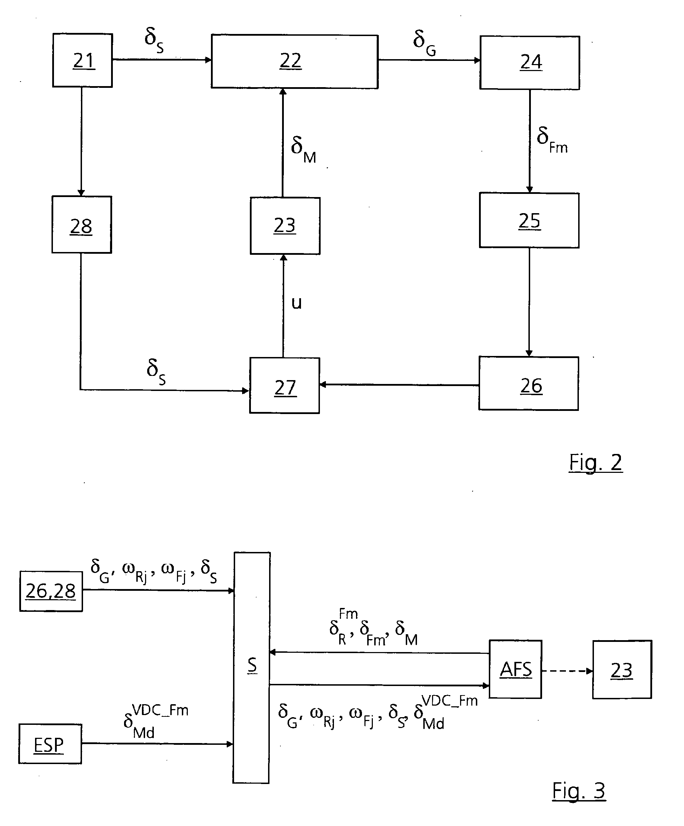

Die Fig. 1 bzw. Fig. 2 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird eine überlagerte Bewegung bzw. ein Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M = 0$ ist mit $i_{\ddot{U}} = \delta_G/\delta_S$ und die mechanische Übersetzung des Lenkgetriebes 14 bzw. 24 mit dem Bezugszeichen $i_L$ bezeichnet.

Auf die lenkbar ausgelegten Räder 15a und 15b wirkt ein von der Straße beeinflusstes Reaktionsmoment $M_V$. In der Fig. 2 sind weiterhin Sensoren 26 und 28 zu sehen, wobei der Sensor 28 den Lenkradwinkel $\delta_S$ detektiert und einem Steuergerät 27 zuführt, während mit dem Bezugszeichen 26 Sensoren gekennzeichnet sind, die Bewegungen 25 des Fahrzeugs (bspw. Gierbewegungen, Querbeschleunigung, Raddrehzahlen, Fahrzeuggeschwindigkeit usw.) und den Ritzelwinkel $\delta_G$ detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen 25 eine Stellgröße u zur Ansteuerung des Stellantriebs 13 bzw. 23 zur Realisierung von Nutzanwendungen (z.B. variable Lenkübersetzung - siehe Fig. 4 und 5). Die Signale der Sensoren 26 können auch einem CAN-Bussystem des Fahrzeugs entnommen werden.

Zwischen den in den Fig. 1 bzw. 2 dargestellten Winkeln und Drehmomenten gelten die bekannten Zusammenhänge ($i_L$ ist eine nichtlineare Funktion):

$$i_L(\delta_{Fm}) = [\delta_S/i_{\ddot{U}} + \delta_M] \qquad (1)$$

und

$$M_L = M_V/(i_L \cdot i_{\ddot{U}}) \qquad (2)$$

Eine Servolenkfunktion wird durch das in den Fig. 1 und 2 gezeigte Lenksystem dadurch erreicht, dass durch eine große Gesamtübersetzung ($i_L \cdot i_{\ddot{U}}$), d.h. durch eine sehr indirekte Lenkung, das Lenkradmoment $M_L$ reduziert wird. Dem Lenkradwinkel $\delta_S$ wird ein Motorwinkel $\delta_M$ nach der oben genannten Gleichung 1 überlagert, so dass ein gewünschter Vorderradwinkel $\delta_{Fm}$ mit einem nicht zu großen Lenkradwinkel eingestellt werden kann. Dabei können durch eine geeignete Ansteuerung des Motors Zusammenhänge zwischen dem Lenkradwinkel und dem Lenkwinkel realisiert werden, die auch vom Fahrzustand, beispielsweise der Fahrzeuggeschwindigkeit oder dem Lenkradwinkel, abhängen können.

Nach der oben genannten Gleichung 2 ist das Lenkradmoment $M_L$ von dem Reaktionsmoment $M_V$ an den lenkbaren Rädern abhängig. Hierdurch ergibt sich das schon erwähnte Problem, dass durch die Wahl eines konstanten Übersetzungsverhältnisses des Lenkgetriebes kein für alle Fahrzustände akzeptables Lenkradmoment bzw. Lenkgefühl erreicht werden kann. Insbesondere darf das Lenkradmoment $M_L$ bei großen Lenkwinkeln im Stand nicht zu groß werden, während es bei Fahrten mit hoher Geschwindigkeit nicht zu klein werden darf.

Aufgrund der dadurch bedingten Sicherheitsanforderungen an das Lenksystem, ist ein Sicherheitskonzept mit Sicherheits- und Diagnosefunktionen, insbesondere, um zufällige Fehler in der Sensoren 26, 28, dem Steuergerät 27 selbst oder der Aktuatorik zu entdecken und geeignet zu reagieren, d.h. beispielsweise die Nutzanwendungen, z. B. die variable Lenkübersetzung geeignet zu schalten und/oder entsprechende Ersatzmodi zu starten, unerlässlich. Die Eingangssignale des Steuergeräts 27, insbesondere $\delta_S$ und die fahrzeugspezifischen Daten der Sensoren 26, werden fortlaufend auf Plausibilität geprüft. Beispielsweise wäre es nachteilig, ein falsches Geschwindigkeitssignal $v_x$ des Fahrzeugs zu akzeptieren, da die variable Lenkübersetzung geschwindigkeitsabhängig variiert wird.

Durch die notwendige Kommunikation mit weiteren Fahrzeugsystemen (ESP, ABS, etc.) ist des weiteren eine modulare Systemvernetzung nahezu unumgänglich. Um diese zu schaffen ist zusätzlich eine vom Kraftfahrzeug selbst bzw. von den dessen anderen Fahrzeugsystemen möglichst unabhängige Schnittstelle erforderlich. Diese Schnittstelle sollte sowohl physikalische Signale als auch Statussignale oder dergleichen aufweisen.

Fig. 3 zeigt eine schematische Übersicht über eine Schnittstelle S eines Lenksystems AFS mit den zugehörigen Sensoren 26, 28, dem Stellantrieb 23 und einem elektronischen Stabilitätsprogramm ESP mit einigen beispielhaft ausgewählten Signalen, wobei die Kommunikation ausgenommen zwischen dem Lenksystem AFS und dem Stellantrieb 23 (durch einen gestrichelten Pfeil angedeutet) über ein CAN-Bussystem des Kraftfahrzeugs erfolgt. Dabei haben die Sensoren 26, 28 den Ritzelwinkel $\delta_G$, Raddrehzahlen $\omega_{Fj}$, $\omega_{Rj}$ und den Lenkradwinkel $\delta_S$ als Ausgangssignal. Des weiteren sendet das ESP einen Soll-Überlagerungswinkel $\delta_{Md}^{VDC\_Fm}(t)$ zur fahrdynamischen Stabilisierung auf den CAN-Bus über die Schnittstelle S an das Lenksystem AFS. Das Lenksystem AFS empfängt die Signale $\delta_G$, $\omega_{Fj}$, $\omega_{Rj}$, $\delta_S$ und $\delta_{Md}^{VDC\_Fm}$. Des weiteren übergibt das Lenksystem AFS den Vorderradwinkel $\delta_{Fm}$, den Ist-Überlagerungswinkel $\delta_M^{Fm}$ und einen Fahrerwunschwinkel $\delta_R^{Fm}$ über die Schnittstelle S auf den CAN-Bus zur Verwendung für weitere Fahrzeugsysteme (nicht näher dargestellt).

Die Schnittstelle S sollte möglichst nicht komplex sein, da sonst eine hohe Abhängigkeit der Fahrwerksysteme vorhanden wäre und ein hoher Aufwand hinsichtlich zusätzlicher Signalüberwachung, etwa bei Verwendung weiterer Signale wie Längs- oder Querbeschleunigung oder Gierrate, vonnöten ist.

Nachstehend ist eine solche minimale Schnittstellenspezifikation geordnet nach Ausgangs- und Eingangssignalen für das Lenksystem AFS beschrieben. Die Signale sind aktuell, d.h. abhängig von der Zeit (t) dargestellt.

Folgende Ausgangssignale sind in der minimalen Schnittstellenspezifikation enthalten: ein Vorderradwinkel $\delta_{Fm}(t)$, ein Soll-Überlagerungswinkel $\delta_{Md}^{SAF\_Fm}(t)$, ein Ist-Überlagerungswinkel $\delta_M^{FM}(t)$, ein Fahrerwunschwinkel $\delta_R^{Fm}(t)$, eine Dynamikreserve $\delta_{Mmax\_add}^{Fm}(t)$, ein Systemstatus des Lenksystems, ein Status von Sicherheitsfunktionen des Lenksystems und ein Ritzelwinkelsensorsignal.

Der mittlere Vorderradwinkel $\delta_{Fm}(t)$ wird unter der Verwendung einer vorzugebenden Lenkkinematik $f_{Lkin}()$ des Lenksystems und aus dem aufbereiteten Messwert des Ritzelwinkelsensors $\delta_G(t)$ berechnet:

$$\delta_{Fm}(t) := f_{Lkin}(\delta_G(t)). \qquad (3)$$

Dabei bezeichnet die Lenkkinematik $f_{Lkin}()$ die Beziehung zwischen dem Ritzelwinkel $\delta_G$ und dem Lenkwinkel $\delta_{Fm}$. Diese Daten können durch Messungen, etwa auf dem Achsprüfstand ermittelt und durch Parameteridentifikation verfeinert werden.

Der Soll-Überlagerungswinkel $\delta_{Md}^{SAF\_Fm}(t)$ (für die Lenkassistenzfunktionen) wird als mittlerer Vorderradwinkel dargestellt und aus dem Soll-Motorwinkel $\delta_{Md}^{SAF}(t)$ der Lenkassistenzfunktionen, der Kinematik $i_M^{-1}$ im Überlagerungsgetriebe 12, 22 und der Lenkkinematik $f_{Lkin}()$ des Lenksystems berechnet:

$$\delta_{Md}^{SAF\_Fm}(t) := f_{Lkin}(i_M^{-1}*\delta_{Md}^{SAF}(t)). \qquad (4)$$

Der Ist-Überlagerungswinkel $\delta_M^{Fm}(t)$ ist ebenfalls als mittlerer Vorderradwinkel dargestellt und wird aus dem gemessenen Motorwinkel $\delta_M(t)$, der Kinematik $i_M^{-1}$ im Überlagerungsgetriebe 12, 22 und der Lenkkinematik $f_{Lkin}()$ des Lenksystems berechnet:

$$\delta_M^{Fm}(t) := f_{Lkin}(i_M^{-1}*\delta_M(t)). \qquad (5)$$

Der Fahrerwunschwinkel ist als Vorderradwinkelgröße dargestellt und wird aus dem gemessenen Lenkradwinkel $\delta_S(t)$, der aktuellen Soll-Lenkübersetzung $i_{Vd}(t)$, der Kinematik $i_d^{-1}$ im Lenkgetriebe und der Lenkkinematik $f_{Lkin}()$ des Lenksystems berechnet:

$$\delta_R^{Fm}(t) := f_{Lkin}(i_d^{-1}*\delta_S(t)*i_{Vd}(t)). \qquad (6)$$

Dynamikreserve: Dieses Signal enthält eine geschätzte maximal zusätzliche Stellgeschwindigkeit $\dot{\delta}_{Mmax\_add}^{Fm}(t)$. Diese Größe wird hauptsächlich von einem übergeordneten Fahrdynamikregler verwendet und wird als Vorderradwinkelgeschwindigkeit dargestellt. Da das Vorzeichen der Stellgröße aus dem Fahrdynamikregler i. A. unabhängig von der Richtung der aktuellen Stellgeschwindigkeit $\dot{\delta}_M^{Fm}(t)$ ist, werden kontinuierlich eine maximal zusätzliche positive $\dot{\delta}_{Mmax\_add\_pos}^{Fm}(t)$ und negative Stellgeschwindigkeit $\dot{\delta}_{Mmax\_add\_neg}^{Fm}(t)$ geschätzt.

Ein Systemstatus des Lenksystems AFS beschreibt dessen aktuellen Zustand, z.B. Init (Initialisierung), Pre-Drive (Vorbereitung des Fahrtmodus), Drive (Fahrt) oder Error (Fehlerzustand).

Status der Sicherheitsfunktionen (Fehlermeldungen): Dieses Statussignal enthält die Fehlermeldungen aus den Sicherheitsfunktionen bzw. der Fehlerstrategie.

Das Ritzelwinkelsensorsignal weist das unbearbeitete Sensorsignal (Messbereich des verwendeten Sensors: $\pm90°$) aus dem Ritzelwinkelsensor auf. Dieses Signal ist von jedem Fahrwerksystem, das es verwendet, selbst zu plausibilisieren und aufzubereiten.

Folgende Eingangssignale sind in der minimalen Schnittstellenspezifikation enthalten: ein Soll-Überlagerungswinkel $\delta_{Md}^{VDC\_Fm}(t)$ zur fahrzeugdynamischen Stabilisierung, ein Flag zur Ausführung eines fahrdynamischen Stabilisierungseingriffs, ein Flag zur Umschaltung zwischen Kennfeldern für die variable Lenkübersetzung, ein Flag zur Umschaltung zwischen Kennfeldern für eine Servotronic- und ECO-Ansteuerung, die Raddrehzahlen $\omega_{Fj}$, $\omega_{Rj}$ mit Vorzeichen, ein Status von Raddrehzahlsensoren, der Lenkradwinkel $\delta_S$, Flags ESP_ABS_flag für ESP- und ABS-Eingriffe für jedes Rad des Kraftfahrzeugs und eine Drehzahl eines Verbrennungsmotors des Kraftfahrzeugs.

Des weiteren wird als Eingangssignal insbesondere dann ein aktuell eingelegter Gang des Kraftfahrzeugs verwendet, wenn das Vorzeichen der Raddrehzahlen $\omega_{Fj}$, $\omega_{Rj}$ nicht vorliegt.

Darüber hinaus werden als Eingangs- und/oder Ausgangssignale im Hinblick auf die Übermittlung sicherheitsrelevanter Signale, zusätzlich Überwachungssignale, vorzugsweise Prüfsummen und Zähler verwendet, welche der Überwachung der CAN-Kommunikation dienen.

Der Soll-Überlagerungswinkel (Fahrdynamikregler) beschreibt die fahrdynamische Stabilisierung $\delta_{Md}^{VDC\_Fm}(t)$ relativ zum aktuellen Soll-Überlagerungswinkel der Lenkassistenzfunktionen $\delta_{Md}^{SAF\_Fm}(t)$.

Das Flag zur Ausführung eines fahrdynamischen Stabilisierungseingriffs ist ein binäres Signal und stellt eine Bedingung für die Ausführung des anstehenden Stabilisierungseingriffs $\delta_{Md}^{VDC\_Fm}(t)$ dar.

Durch das Flag zur Umschaltung der Kennfelder für die variable Lenkübersetzung (Nutzanwendung) wird eine Umschaltung zwischen unterschiedlichen Betriebsmodi (z.B. Sport, Komfort) der variablen Lenkübersetzung ermöglicht.

Flag zur Umschaltung der Kennfelder für eine Servotronic - und ECO-Ansteuerung: Dieses binäre Signal ermöglicht eine Umschaltung zwischen zwei unterschiedlichen Betriebsmodi (z.B. Sport, Komfort) der Servotronic- und ECO-Ansteuerung.

Die Raddrehzahlen $\omega_{Fj}$, $\omega_{Rj}$ mit Vorzeichen dienen als Eingänge für die Sicherheitsfunktionen des Lenksystems AFS und werden zur internen Berechnung einer Referenzfahrzeuggeschwindigkeit $v_X$ verwendet. Die berechnete Referenzfahrzeuggeschwindigkeit $v_X$ dient als Eingang für die Nutzanwendungen.

Der Status der Raddrehzahlsensoren ist eine Voraussetzung für die Verwendung der Signale $\omega_{Fj}$, $\omega_{Rj}$ aus den Raddrehzahlsensoren.

Lenkradwinkel: Dieser Absolutwinkel dient als Eingang für die Sicherheitsfunktionen des Lenksystems AFS und für die kinematischen Nutzanwendungen.

Flags für ESP- und ABS-Eingriffe ESP_ABS_flag (separat für jedes Rad): Diese binären Signale dienen ebenfalls als Eingänge für Sicherheitsfunktionen des Lenksystems AFS.

Die Drehzahl des Verbrennungsmotors wird bei der Überwachung der Dynamik des Stellers und der Schätzung der Dynamikreserve verwendet.

Bezugszeichen

| 11 | Lenkrad |
| 12 | Überlagerungsgetriebe |
| 13 | Stellantrieb |
| 14 | Lenkgetriebe |
| 15a | Räder |
| 15b | Räder |
| 16 | Lenkgestänge |

| 21 | Lenkrad |
| 22 | Überlagerungsgetriebe |
| 23 | Stellantrieb |
| 24 | Lenkgetriebe |
| 25 | Fahrzeugbewegungen |
| 26 | Sensoren |
| 27 | Steuergerät |
| 28 | Sensoren |

| 101 | Verbindung |
| 102 | Verbindung |
| 103 | Verbindung |
| 104 | Verbindung |

| $\delta_S$ | Lenkradwinkel |
| $\delta_M$ | Motorwinkel |
| $\delta_G$ | überlagerte Bewegung |
| $\delta_{Fm}$ | Lenkwinkel |
| $i_{ü}$ | mech. Übersetzung des Überlagerungsgetriebes |
| $i_L$ | mech. Übersetzung des Lenkgetriebes |
| $M_V$ | Reaktionsmoment |
| $M_L$ | Lenkradmoment |
| $\omega_{Rj}$ | Hinterraddrehzahlen |

| $\omega_{Fj}$ | Vorderraddrehzahlen |
| $v_X$ | Fahrzeuggeschwindigkeit |
| $\delta_{mD}^{VDC\_Fm}$ | Soll-Überlagerungswinkel |
| $\delta_R^{Fm}(t)$ | Fahrerwunschwinkel |

| ESP | elektronisches Stabilitätsprogramm |
| AFS | Lenksystem |

**Patentansprüche**

**1.** Verfahren zum Betrieb eines Lenksystems für ein Fahrzeug mit wenigstens einem lenkbaren Rad (15), wobei eine durch den Fahrer des Fahrzeugs initiierte Lenkbewegung ($\delta_S$) und/oder weitere fahrzeugspezifische Zustände, insbesondere die Fahrzeuggeschwindigkeit ($v_X$), als Eingangssignale von einem Steuergerät (27) empfangen werden und daraus als Ausgangssignal ein Steuersignal (u) zur Erzeugung der Lenkbewegung des lenkbaren Rades ($\delta_{Fm}$) insbesondere über eine Aktuatorik des Lenksystems, vorzugsweise zur Realisierung von Nutzanwendungen, ermittelt wird,
**gekennzeichnet durch** die Verwendung einer minimalen Systemschnittstelle mit den notwendigen Eingangssignalen und Ausgangssignalen für die Anbindung an weitere Fahrzeugsysteme, insbesondere elektronisches Stabilitätsprogramm (ESP) und Antiblockiersystem (ABS).

2. Verfahren nach Anspruch 1,
**dadurch gekennzeichnet, dass** ein Stellantrieb (13;23) und ein Überlagerungsgetriebe (12;22) vorgesehen sind, wobei durch das Überlagerungsgetriebe (12;22) die durch den Fahrer des Fahrzeugs initiierte Lenkbewegung ($\delta_S$) und die durch den Stellantrieb (13;23) initiierte Bewegung ($\delta_M$) zur Erzeugung der Lenkbewegung des lenkbaren Rades ($\delta_{Fm}$) zur Realisierung der Nutzanwendungen in einen Ritzelwinkel ($\delta_G$) überlagert werden, wobei der Stellantrieb (13;23) zur Initiierung der Bewegung ($\delta_M$) durch das Steuersignal (u) des Steuergeräts (27) angesteuert wird.

3. Verfahren nach Anspruch 1 oder 2,
**dadurch gekennzeichnet, dass** als Ausgangssignale

- ein Vorderradwinkel ($\delta_{Fm}(t)$);
- ein Soll-Überlagerungswinkel ($\delta_{Md}^{SAF\_Fm}(t)$);
- ein Ist-Überlagerungswinkel ($\delta_M^{Fm}(t)$);
- ein Fahrerwunschwinkel ($\delta_R^{Fm}(t)$);
- eine Dynamikreserve ($\delta_{Mmax\_add}^{Fm}(t)$);
- ein Systemstatus des Lenksystems;
- ein Status von Sicherheitsfunktionen; und
- ein Ritzelwinkelsensorsignal

verwendet werden.

4. Verfahren nach Anspruch 1, 2 oder 3,
**dadurch gekennzeichnet, dass** als Eingangssignale

- ein Soll-Überlagerungswinkel ($\delta_{Md}^{VDC\_Fm}(t)$) zur fahrzeugdynamischen Stabilisierung;
- ein Flag zur Ausführung eines fahrdynamischen Stabilisierungseingriffs;
- ein Flag zur Umschaltung zwischen Kennfeldern für eine variable Lenkübersetzung;
- ein Flag zur Umschaltung zwischen Kennfeldern für eine Servotronic- und ECO-Ansteuerung;
- Raddrehzahlen ($\omega_{Fj}, \omega_{Rj}$) mit Vorzeichen;
- ein Status von Raddrehzahlsensoren;
- der Lenkradwinkel ($\delta_S$);
- Flags ESP_ABS_flag für ESP- und ABS-Eingriff für jedes Rad des Kraftfahrzeugs; und
- eine Drehzahl eines Motors, insbesondere eines Verbrennungsmotors des Kraftfahrzeugs;

verwendet werden.

5. Verfahren nach Anspruch 4,
**dadurch gekennzeichnet, dass** als Eingangssignal insbesondere dann ein aktuell eingelegter Gang verwendet wird, wenn das Vorzeichen der Raddrehzahlen ($\omega_{Fj}, \omega_{Rj}$) nicht vorliegt.

6. Verfahren nach einem der Ansprüche 1 bis 5,
**dadurch gekennzeichnet, dass** als Eingangs- und/oder Ausgangssignale, insbesondere bei der Übermittlung sicherheitsrelevanter Signale, zusätzliche Überwachungssignale, vorzugsweise Prüfsummen oder Zähler verwendet werden.

7. Computerprogramm mit Programmcodemitteln, um ein Verfahren gemäß einem der Ansprüche 1 bis 6 durchzuführen, wenn dass Programm auf einem Computer, insbesondere auf dem Steuergerät (27) des Lenksystems, ausgeführt wird.

8. Steuergerät (27) für ein Lenksystem zur Ausführung eines Computerprogramms gemäß Anspruch 7.

EP 1 568 574 A1

## Fig. 1

_Fig. 2_

_Fig. 3_

**Europäisches Patentamt**

## EUROPÄISCHER RECHERCHENBERICHT

Nummer der Anmeldung

EP 05 00 1515

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 354 788 A (AISIN SEIKI KABUSHIKI KAISHA; TOYODA KOKI KABUSHIKI KAISHA; ADVICS CO.) 22. Oktober 2003 (2003-10-22) | 1 | B62D5/04 |
| Y | * Absatz [0025] - Absatz [0029] * <br> * Absatz [0042] * <br> * Abbildungen 1-3,5,12 * <br> ----- | 2-8 | |
| X | EP 1 357 008 A (AISIN SEIKI KABUSHIKI KAISHA; TOYODA KOKI KABUSHIKI KAISHA; ADVICS CO.) 29. Oktober 2003 (2003-10-29) | 1 | |
| Y | * Abbildung 14 * <br> * Absatz [0053] - Absatz [0055] * <br> ----- | 2-8 | |
| Y | DE 197 49 005 A1 (ROBERT BOSCH GMBH, 70469 STUTTGART, DE) 7. Januar 1999 (1999-01-07) <br> * Spalte 6 - Spalte 8 * <br> * Abbildungen 1-5 * <br> ----- | 2-8 | |

RECHERCHIERTE SACHGEBIETE (Int.Cl.7)

B60T
B62D

Der vorliegende Recherchenbericht wurde für alle Patentansprüche erstellt

| Recherchenort | Abschlußdatum der Recherche | Prüfer |
|---|---|---|
| München | 2. Juni 2005 | Billen, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　　EP 05 00 1515

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2005

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1354788 | A | | 22-10-2003 | JP | 2003291838 | A | 15-10-2003 |
| | | | | EP | 1354788 | A1 | 22-10-2003 |
| | | | | EP | 1502838 | A2 | 02-02-2005 |
| | | | | US | 2003221898 | A1 | 04-12-2003 |
| EP 1357008 | A | | 29-10-2003 | JP | 2003312319 | A | 06-11-2003 |
| | | | | EP | 1357008 | A2 | 29-10-2003 |
| | | | | US | 2004016594 | A1 | 29-01-2004 |
| DE 19749005 | A1 | | 07-01-1999 | WO | 9901320 | A1 | 14-01-1999 |
| | | | | DE | 59811631 | D1 | 05-08-2004 |
| | | | | EP | 0920389 | A1 | 09-06-1999 |
| | | | | JP | 2001500821 | T | 23-01-2001 |
| | | | | US | 6226581 | B1 | 01-05-2001 |

EPO FORM P0461

Für nähere Einzelheiten zu diesem Anhang : siehe Amtsblatt des Europäischen Patentamts, Nr.12/82